# EUROPEAN PATENT SPECIFICATION

(11) **EP 2 924 013 B1**
(45) Date of publication and mention of the grant of the patent: **20.02.2019**
(21) Application number: 15160999.7
(22) Date of filing: 26.03.2015
(51) Int. Cl.: C04B 35/119, C04B 35/488, C04B 35/622, C04B 35/626, C04B 35/634, B32B 18/00, G01N 27/407, B28B 19/00, C04B 41/45

(54) **METHOD FOR MANUFACTURING A FILM-SUBSTRAT STRUCTURE**
VERFAHREN ZUR HERSTELLUNG EINER FILM-SUBSTRATSTRUKTUR
METHOD DE PREPARATION D'UNE STRUCTURE FILM-SUBSTRAT

(30) Priority: 28.03.2014 JP 2014068564; 30.09.2014 JP 2014200787
(43) Date of publication of application: 30.09.2015
(73) Proprietor: NGK Insulators, Ltd., Nagoya-city, Aichi 467-8530 (JP)
(72) Inventor: Moriyama, Satoko, Nagoya-city, Aichi 467-8530 (JP); Murakami, Mika, Nagoya-city, Aichi 467-8530 (JP); Yoshioka, Kunihiko, Nagoya-city, Aichi 467-8530 (JP); Sakakibara, Hironori, Nagoya-city, Aichi 467-8530 (JP)
(74) Representative: Mewburn Ellis LLP

(56) References cited:
- EP-A2- 1 136 461
- JP-A- 2013 217 733
- US-A1- 2003 159 928
- US-A1- 2003 232 221
- US-A1- 2009 226 685

## Description

### Technical Field

The present invention relates to a method for producing a film laminated structure.

### Background Art

There are gas sensors that include a sensor device for determining the concentration of a predetermined gas, such as NOx, in a gas to be measured, such as an automobile exhaust gas. In such gas sensors, it is known that a porous protective film is disposed on a surface of each of such sensor devices. For example, in Patent Literature 1, a slurry for forming a porous protective film is injected into a cavity of a mold, a detection part of a sensor device is placed in the slurry, and the slurry is cured to form a porous protective film around the detection part. The slurry contains ceramic particles, silica sol, and nitric acid and has a pH of 3.4 or less. It is stated that this can solve a problem of an uneven film thickness when a dip method is applied.

### Citation List

### Patent Literature

PTL 1: JP 2013-217733 A

### Disclosure of Invention

JP 2013-217733 (PTL 1) A describes a gas sensor element which includes a detection part, which is formed by laminating a solid electrolyte with a pair of electrodes arranged on both sides and a heat generator including a heating source, and a porous protective layer formed around the detection part. Although Patent Literature 1 does not describe specific procedures for forming a porous protective film from the slurry, it is surmised that after the slurry is cured, that is, after silicon oxide is polymerized, the porous protective film is formed by evaporating water from the slurry by a drying process as in a dip method. However, in Patent Literature 1, because the volume contraction is very large in the polymerization and drying process, stress due to drying shrinkage tends to cause cracks in the porous protective film. Thus, the porous protective film has a thickness of approximately 80 µm or less, and it is difficult to increase the thickness.

The present invention has been made to solve such problems, and it is a principal object of the present invention to cover a substrate with a porous thick film having a uniform external shape.

In order to achieve the principal object, the present invention has employed the following means.

A method for producing a film laminated structure according to the present invention **is set out in claim 1.**
US A1 2009/0226685 describes the manufacture of a ceramic green sheet which contains a body which results from molding and solidifying a conductor paste. The green sheet is obtained by moulding and solidifying a ceramic slurry that contains a ceramic powder, dispersion medium and gelling agent.
US A1 2003/0232221 describes a method of forming a sintered body having a first phase and a second phase. The first phase is formed by shaping a sinterable slurry in a mold and gelling the slurry. The slurry contains ceramic powder, a dispersing medium and gelling agent. A similar second phase is formed in the mold after the first phase and prior to the sintering.
US A1 2003 0159928 describes a prismatic ceramic heater for heating a gas sensor element which has a rectangular cross-section shape, and is partially coated with a porous protective layer.

The substrate can be covered with a uniform porous thick film by this production method. More specifically, the volume contraction resulting from hardening of the slurry is small because the slurry around the substrate is molded and hardened by polymerization of the gelling agent containing at least two organic compounds to form the green structure. Thus, the porous film rarely has cracks resulting from hardening or firing. Thus, the substrate can be covered with the porous thick film. Furthermore, in the molding, because the mold is charged with the slurry, and the substrate is placed at the predetermined position in the mold, the positional relationship between the porous film and the substrate after firing reflects the positional relationship of the slurry and the substrate before firing. Thus, the thickness of the porous film after firing can be easily made uniform or can be partly increased by adjusting the positional relationship between the slurry and the substrate before firing. The term "hardening", as used herein, includes a step of shape retention by the reaction of a gelling agent and removal of a dispersion medium. The term "film thickness", as used herein, refers to the thickness of a film alone. For example, in the case that a film is formed on both sides of a substrate, the film thickness refers to the thickness of the film on one side. The porous film may have any external shape depending on the shape of the mold. The external shape is independent of the shape of the substrate to be placed in the mold. Since the external shape depends on the shape of the mold, and the volume contraction is small, as described above, the porous film can include a portion having a small radius of curvature.

In a method for producing a film laminated structure according to the present invention, the porous film may have a thickness in the range of 100 to 1000 µm. Such a porous thick film having a thickness of more than 100 µm can be attached to a substrate without cracking by a production method according to the present invention.

In a method for producing a film laminated structure according to the present invention, the raw material powder may be a ceramic powder, and the slurry may contain a sintering aid for the ceramic powder. This allows the ceramic powder to be fired at a relatively low temperature in the step (d), and therefore the porous film can be easily formed from the green film. The sintering aid may be, but is not limited to, one selected from aluminum oxide, zirconium oxide, zinc oxide, silicon oxide, calcium carbonate, barium carbonate, magnesium carbonate, silicon nitride, aluminum nitride, titania, and spinel, or a composite oxide or composite nitride containing two or more of these materials. The specific material of the sintering aid may be appropriately selected for the material of the ceramic powder. For example, the material of the sintering aid may be selected so as to facilitate bonding between ceramic particles even at low firing temperatures (temperatures lower than the temperatures at which the ceramic powder is sintered without the aid). Formation of a fired product from the ceramic powder in the green film at low temperatures can reduce thermal damage to the substrate. The sintering aid is preferably a sintering aid containing a component for forming a glass layer or a sintering aid that has a large specific surface area and promotes sintering of the ceramic powder even at low temperatures.

In a method for producing a film laminated structure according to the present invention, the mold may be composed of a plurality of divided molds closely attached with no spaces therebetween. The green structure composed of the substrate and the green film can be easily released from the divided molds by separating the divided molds. The mold may have any shape and may include runners, gates, and bents branched from one inlet such that a plurality of molded products can be formed. The mold may be tapered to facilitate demolding. The technique described in Patent Literature 1 does not require such a mechanism owing to large drying shrinkage.

In a method for producing a film laminated structure according to the present invention, at least two organic compounds in the gelling agent may be polymerizable through a urethane reaction. This can greatly decrease volume contraction resulting from hardening of the slurry.

In a method for producing a film laminated structure according to the present invention, a resin may be added to the slurry. The resin may be of any type. The resin may impart elasticity or plasticity to the resulting film. This can further reduce the occurrence of cracking due to volume contraction resulting from drying or demolding.

In a method for producing a film laminated structure according to the present invention, at least a surface of the substrate may be formed of a fired product and/or a metal. Such a substrate has high heat resistance and is negligibly affected by heat during firing in the step (d). Furthermore, even when the substrate includes a metal portion on its surface, the metal portion is not corroded by acids because the slurry contains an organic solvent as a dispersion medium rather than water.

The material of the fired product may be, but is not limited to, aluminum oxide, zirconium oxide, zinc oxide, silicon oxide, calcium carbonate, barium carbonate, magnesium carbonate, silicon nitride, aluminum nitride, titania, or spinel. The material of the metal may be, but is not limited to, molybdenum, tungsten, nickel, or cermet. The difference in thermal expansion coefficient between the porous film and the substrate is preferably small.

In a method for producing a film laminated structure according to the present invention, the substrate is a sensor device that includes a solid electrolyte layer composed mainly of zirconia. Such a sensor device can be easily covered with a porous thick film. Although such a sensor device includes a metal portion (for example, an electrode) on its surface, the metal portion is not corroded by acids because the slurry contains an organic solvent as a dispersion medium rather than water.

A film laminated structure according to the present invention is formed from the slurry with a mold and therefore has consistent external dimensions.

A film laminated structure made according to the present invention includes a porous film on at least part of a surface of a substrate. The substrate is a rectangular parallelepiped, has longitudinal rectangular end faces, and has a Δd of less than 50 µm (preferably less than 20 µm) at five measurement positions, wherein in a cross-section of the film laminated structure along a line passing through midpoints of opposite long sides of the rectangular end faces, the five measurement positions are two points on a base line spaced inwardly at a distance of X/12 from each of two base positions and three points that divide a line segment between the two points into quarters, X being a longitudinal length of the porous film, the base positions being spaced inwardly at a distance of X/12 from each longitudinal end of the porous film, the base line being a straight line passing through the two base positions, and the Δd is a length of a perpendicular line from each of the measurement positions to a surface of the porous film, the perpendicular line being orthogonal to the base line and passing through the corresponding measurement position. Such a film laminated structure can be produced by a production method according to the present invention as described above.

A gas sensor according to the present invention includes the film laminated structure. The gas sensor is also formed from the slurry with a mold and therefore has consistent external dimensions.

### Brief Description of Drawings

Fig. 1 is a schematic perspective view of a gas sensor 100.
Fig. 2 is a cross-sectional view taken along the line A-A of Fig. 1.
Fig. 3 is a production process drawing of the gas sensor 100.
Fig. 4 is a cross-sectional view of a gas sensor 100 according to a modified example.
Fig. 5 is a schematic view of the vicinity of a boundary between a mold 110 and a green film 191.
Fig. 6 is a photograph of a cross section in the vicinity of a surface of the green film 191.
Fig. 7 is an explanatory view of the gas sensor 100; (a) is a front view, and (b) is an upper view.
Fig. 8 is a cross-sectional view of the gas sensor 100 taken along the line CL of Fig. 7.
Fig. 9 is an enlarged cross-sectional view in the vicinity of a measurement position MP.
Fig. 10 is a graph of the length Δd of gas sensors according to Example 1 and Comparative Example 1.

### Description of Embodiments

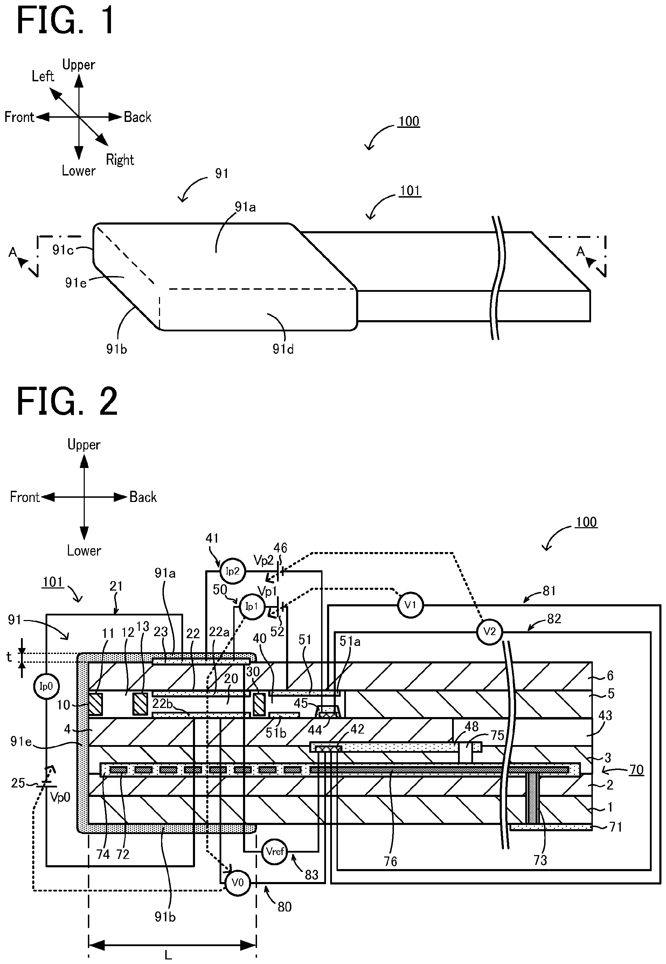

A general structure of a gas sensor 100 that includes a sensor device 101 made according to an embodiment of the present invention will be described below. Fig. 1 is a schematic perspective view of an example of the gas sensor 100. Fig. 2 is a cross-sectional view taken along the line A-A of Fig. 1. The gas sensor 100 determines the concentration of a predetermined gas, such as NOx, in a gas to be measured, such as an automobile exhaust gas, with the sensor device 101. The sensor device 101 has a long rectangular parallelepiped shape. The longitudinal direction (the left-right direction of Fig. 1) of the sensor device 101 is the front-back direction. The thickness direction (the upper-lower direction of Fig. 1) of the sensor device 101 is the vertical direction. The width direction (the direction perpendicular to the front-back direction and to the vertical direction) of the sensor device 101 is referred to as a left-right direction. Fig. 1 illustrates the sensor device 101 viewed from the upper right front. Fig. 2 is a cross-sectional view of the sensor device 101 along the center in the front-back direction.

As illustrated in Fig. 2, the sensor device 101 includes six layers, that is, a first substrate layer 1, a second substrate layer 2, a third substrate layer 3, a first solid electrolyte layer 4, a spacer layer 5, and a second solid electrolyte layer 6 stacked in this order from the bottom of the drawing. Each of the six layers is a solid electrolyte layer composed mainly of oxygen ion conducting zirconia (ZrO₂). The solid electrolyte of the six layers is dense and gastight. For example, the sensor device 101 is produced by subjecting a ceramic green sheet corresponding to each layer to predetermined processing and circuit pattern printing, stacking the ceramic green sheets, and combining the ceramic green sheets into a single unit by firing.

A gas inlet 10, a first diffusion controlling portion 11, a buffer space 12, a second diffusion controlling portion 13, a first internal vacancy 20, a third diffusion controlling portion 30, and a second internal vacancy 40 disposed in this order at an end (front end) of the sensor device 101 and between an undersurface of the second solid electrolyte layer 6 and a top surface of the first solid electrolyte layer 4 are in communication with each other.

The gas inlet 10, the buffer space 12, the first internal vacancy 20, and the second internal vacancy 40 are spaces hollowed from the spacer layer 5 in the sensor device 101. The top of the spaces are defined by the undersurface of the second solid electrolyte layer 6. The bottom of the spaces are defined by the top surface of the first solid electrolyte layer 4. The sides of the spaces are defined by the side surfaces of the spacer layer 5.

Each of the first diffusion controlling portion 11, the second diffusion controlling portion 13, and the third diffusion controlling portion 30 is composed of two long slits (the longitudinal direction of the slits is perpendicular to the drawing). The portion from the gas inlet 10 to the second internal vacancy 40 is also referred to as a gas flow portion.

A reference gas inlet space 43 is disposed further away from the front end than the gas flow portion and between a top surface of the third substrate layer 3 and an undersurface of the spacer layer 5. The sides of the reference gas inlet space 43 are defined by the side surfaces of the first solid electrolyte layer 4. For example, the atmosphere is introduced into the reference gas inlet space 43 as a reference gas for the measurement of the NOx concentration.

An atmosphere inlet layer 48 is formed of a porous ceramic. The reference gas is introduced into the atmosphere inlet layer 48 through the reference gas inlet space 43. The atmosphere inlet layer 48 covers a reference electrode 42.

The reference electrode 42 is disposed between the top surface of the third substrate layer 3 and the first solid electrolyte layer 4 and, as described above, is surrounded by the atmosphere inlet layer 48, which communicates with the reference gas inlet space 43. As described below, the reference electrode 42 can be used to measure the oxygen concentration (oxygen partial pressure) of the first internal vacancy 20 or the second internal vacancy 40.

In the gas flow portion, the gas inlet 10 opens to the external space. A gas to be measured is introduced from the external space into the sensor device 101 through the gas inlet 10. The first diffusion controlling portion 11 applies predetermined diffusion resistance to the gas to be measured introduced through the gas inlet 10. The buffer space 12 is a space for directing a gas to be measured introduced through the first diffusion controlling portion 11 to the second diffusion controlling portion 13. The second diffusion controlling portion 13 applies predetermined diffusion resistance to a gas to be measured introduced into the first internal vacancy 20 through the buffer space 12. When a gas to be measured is introduced from the outside of the sensor device 101 into the first internal vacancy 20, the gas to be measured rapidly introduced into the sensor device 101 through the gas inlet 10 due to pressure fluctuation of the gas to be measured (exhaust pressure pulsation in the case that the gas to be measured is an automobile exhaust gas) in the external space is introduced into the first internal vacancy 20 not directly but after variations in the concentration of gas to be measured are cancelled through the first diffusion controlling portion 11, the buffer space 12, and the second diffusion controlling portion 13. Thus, variations in the concentration of the gas to be measured introduced into the first internal vacancy 20 become almost negligible. The first internal vacancy 20 is a space for adjusting the oxygen partial pressure of a gas to be measured introduced through the second diffusion controlling portion 13. The oxygen partial pressure is adjusted by operation of a main pump cell 21.

The main pump cell 21 is an electrochemical pump cell that is composed of an inner pump electrode 22, an outer pump electrode 23, and the second solid electrolyte layer 6 disposed between these electrodes. The inner pump electrode 22 includes a ceiling electrode 22a over substantially the entire undersurface of the second solid electrolyte layer 6 facing the first internal vacancy 20. The outer pump electrode 23 is disposed on a top surface of the second solid electrolyte layer 6 in a region opposite the ceiling electrode 22a and is exposed to the external space.

The inner pump electrode 22 is disposed on the upper and lower solid electrolyte layers that define the first internal vacancy 20 (the second solid electrolyte layer 6 and the first solid electrolyte layer 4) and on the spacer layer 5, which forms a side wall. More specifically, the ceiling electrode 22a is disposed on the undersurface of the second solid electrolyte layer 6, which forms a ceiling surface of the first internal vacancy 20, a bottom electrode 22b is disposed on the top surface of the first solid electrolyte layer 4, which forms a bottom of the first internal vacancy 20, and side electrodes (not shown) are disposed on the side walls (an inner surface) of the spacer layer 5, which form the side walls of the first internal vacancy 20, so as to connect the ceiling electrode 22a to the bottom electrode 22b. The side electrodes constitute a tunnel structure.

The inner pump electrode 22 and the outer pump electrode 23 are porous cermet electrodes (for example, Pt-ZrO₂ cermet electrodes containing 1% Au). The inner pump electrode 22 to be in contact with a gas to be measured is formed of a material having a decreased ability to reduce a NOx component in the gas to be measured.

In the main pump cell 21, a desired pump voltage Vp0 is applied between the inner pump electrode 22 and the outer pump electrode 23 to pass a pump current Ip0 between the inner pump electrode 22 and the outer pump electrode 23 in a positive or negative direction, thereby pumping oxygen from the first internal vacancy 20 to the external space or pumping oxygen from the external space into the first internal vacancy 20.

In order to determine the oxygen concentration (oxygen partial pressure) of the atmosphere of the first internal vacancy 20, the inner pump electrode 22, the second solid electrolyte layer 6, the spacer layer 5, the first solid electrolyte layer 4, the third substrate layer 3, and the reference electrode 42 constitute an electrochemical sensor cell, that is, an oxygen partial pressure detection sensor cell 80 for controlling a main pump.

The oxygen concentration (oxygen partial pressure) of the first internal vacancy 20 can be determined by measuring the electromotive force V0 of an oxygen partial pressure detection sensor cell 80 for controlling a main pump. The pump current Ip0 is controlled by feedback control of the pump voltage Vp0 of a variable power supply 25 so as to hold the electromotive force V0 constant. Thus, the oxygen concentration of the first internal vacancy 20 can be held constant at a predetermined value.

The third diffusion controlling portion 30 applies predetermined diffusion resistance to a gas to be measured and directs the gas to be measured to the second internal vacancy 40. The oxygen concentration (oxygen partial pressure) of the gas to be measured is controlled by operation of the main pump cell 21 in the first internal vacancy 20.

The second internal vacancy 40 is a treatment space for the measurement of the nitrogen oxide (NOx) concentration of a gas to be measured introduced through the third diffusion controlling portion 30. The NOx concentration is principally measured by operation of the measurement pump cell 41 in the second internal vacancy 40 in which the oxygen concentration is adjusted with the auxiliary pump cell 50.

In the second internal vacancy 40, after the oxygen concentration (oxygen partial pressure) is adjusted in advance in the first internal vacancy 20, a gas to be measured introduced through the third diffusion controlling portion is subjected to adjustment of the oxygen partial pressure with the auxiliary pump cell 50. Thus, the oxygen concentration of the second internal vacancy 40 can be held constant with high precision, and the gas sensor 100 can measure the NOx concentration with high precision.

The auxiliary pump cell 50 is an auxiliary electrochemical pump cell that is composed of an auxiliary pump electrode 51, the outer pump electrode 23 (this is not limited to the outer pump electrode 23 and may be an appropriate electrode disposed outside the sensor device 101), and the second solid electrolyte layer 6. The auxiliary pump electrode 51 includes a ceiling electrode 51a over substantially the entire undersurface of the second solid electrolyte layer 6 facing the second internal vacancy 40.

Like the inner pump electrode 22 in the first internal vacancy 20, the auxiliary pump electrode 51 has a tunnel structure in the second internal vacancy 40. More specifically, the ceiling electrode 51a is disposed on the second solid electrolyte layer 6, which forms a ceiling surface of the second internal vacancy 40, a bottom electrode 51b is disposed on the first solid electrolyte layer 4, which forms a bottom of the second internal vacancy 40, and side electrodes (not shown) that connect the ceiling electrode 51a to the bottom electrode 51b are disposed on the wall surfaces of the spacer layer 5, which form the side walls of the second internal vacancy 40. These electrodes constitute a tunnel structure. Like the inner pump electrode 22, the auxiliary pump electrode 51 is also formed of a material having a decreased ability to reduce a NOx component in a gas to be measured.

In the auxiliary pump cell 50, a desired pump voltage Vp1 is applied between the auxiliary pump electrode 51 and the outer pump electrode 23 to pump oxygen from the atmosphere of the second internal vacancy 40 to the external space or from the external space into the second internal vacancy 40.

In order to control the oxygen partial pressure of the atmosphere of the second internal vacancy 40, the auxiliary pump electrode 51, the reference electrode 42, the second solid electrolyte layer 6, the spacer layer 5, the first solid electrolyte layer 4, and the third substrate layer 3 constitute an electrochemical sensor cell, that is, an oxygen partial pressure detection sensor cell 81 for controlling an auxiliary pump.

Pumping with the auxiliary pump cell 50 is powered with a variable power supply 52. The voltage of the variable power supply 52 is controlled on the basis of the electromotive force V1 determined with the oxygen partial pressure detection sensor cell 81 for controlling an auxiliary pump. The oxygen partial pressure of the atmosphere of the second internal vacancy 40 is decreased so as not to substantially affect NOx measurement.

Furthermore, together with this, the pump current Ip1 is used to control the electromotive force of the oxygen partial pressure detection sensor cell 80 for controlling a main pump. More specifically, the pump current Ip1 is input as a control signal to the oxygen partial pressure detection sensor cell 80 for controlling a main pump to control the electromotive force V0 such that the oxygen partial pressure of a gas to be measured introduced into the second internal vacancy 40 through the third diffusion controlling portion 30 consistently has a constant gradient. For use as a NOx sensor, the oxygen concentration of the second internal vacancy 40 is maintained at approximately 0.001 ppm by operation of the main pump cell 21 and the auxiliary pump cell 50.

The measurement pump cell 41 measures the NOx concentration of a gas to be measured in the second internal vacancy 40. The measurement pump cell 41 is an electrochemical pump cell that is composed of a measuring electrode 44, the outer pump electrode 23, the second solid electrolyte layer 6, the spacer layer 5, and the first solid electrolyte layer 4. The measuring electrode 44 is disposed on the top surface of the first solid electrolyte layer 4 facing the second internal vacancy 40 and is separated from the third diffusion controlling portion 30.

The measuring electrode 44 is a porous cermet electrode. The measuring electrode 44 also functions as a NOx reduction catalyst for reducing NOx in the atmosphere of the second internal vacancy 40. The measuring electrode 44 is covered with a fourth diffusion controlling portion 45.

The fourth diffusion controlling portion 45 is a film composed of a porous ceramic material. The fourth diffusion controlling portion 45 functions to limit the NOx flow to the measuring electrode 44 and also functions as a protective layer for the measuring electrode 44. The measurement pump cell 41 can pump oxygen produced by decomposition of nitrogen oxides in the ambient atmosphere of the measuring electrode 44 and determine the amount of produced oxygen as a pump current Ip2.

In order to determine the oxygen partial pressure around the measuring electrode 44, the first solid electrolyte layer 4, the third substrate layer 3, the measuring electrode 44, and the reference electrode 42 constitute an electrochemical sensor cell, that is, an oxygen partial pressure detection sensor cell 82 for controlling a measurement pump. A variable power supply 46 is controlled on the basis of the electromotive force V2 determined with the oxygen partial pressure detection sensor cell 82 for controlling a measurement pump.

A gas to be measured introduced into the second internal vacancy 40 reaches the measuring electrode 44 through the fourth diffusion controlling portion 45 while the oxygen partial pressure is controlled. Nitrogen oxides in a gas to be measured around the measuring electrode 44 are reduced to produce oxygen (2NO → N₂ + O₂). The produced oxygen is pumped by the measurement pump cell 41. The voltage Vp2 of the variable power supply 46 is controlled such that the control voltage V2 determined with the oxygen partial pressure detection sensor cell 82 for controlling a measurement pump is constant. The amount of oxygen produced around the measuring electrode 44 is proportional to the concentration of nitrogen oxides in a gas to be measured. Thus, the concentration of nitrogen oxides in a gas to be measured can be calculated from the pump current Ip2 in the measurement pump cell 41.

An oxygen partial pressure detection means serving as an electrochemical sensor cell composed of the measuring electrode 44, the first solid electrolyte layer 4, the third substrate layer 3, and the reference electrode 42 can determine the electromotive force depending on the difference between the amount of oxygen produced by reduction of a NOx component in the atmosphere around the measuring electrode 44 and the amount of oxygen in the reference atmosphere and thereby determine the concentration of the NOx component in a gas to be measured.

The second solid electrolyte layer 6, the spacer layer 5, the first solid electrolyte layer 4, the third substrate layer 3, the outer pump electrode 23, and the reference electrode 42 constitute an electrochemical sensor cell 83. The oxygen partial pressure of a gas to be measured on the outside of the sensor can be determined from the electromotive force Vref of the sensor cell 83.

In the gas sensor 100 having such a structure, the main pump cell 21 and the auxiliary pump cell 50 supply the measurement pump cell 41 with a gas to be measured having a consistently low oxygen partial pressure (so as not to substantially affect NOx measurement). Thus, the NOx concentration of a gas to be measured can be determined from the pump current Ip2 resulting from pumping oxygen produced by reduction of NOx approximately in proportion to the NOx concentration of a gas to be measured out of the measurement pump cell 41.

The sensor device 101 also includes a heater unit 70 that has a temperature control function by heating and insulating the sensor device 101 in order to increase the oxygen ion conductivity of the solid electrolyte. The heater unit 70 includes a heater connector electrode 71, a heater 72, a through-hole 73, a heater insulating layer 74, and a pressure release hole 75.

The heater connector electrode 71 is an electrode in contact with an undersurface of the first substrate layer 1. The heater unit 70 can be supplied with electricity from the outside by connecting the heater connector electrode 71 to an external power supply.

The heater 72 is an electrical resistor between the second substrate layer 2 and the third substrate layer 3. The heater 72 is coupled to the heater connector electrode 71 via the through-hole 73 and generates heat by the supply of electricity from the outside via the heater connector electrode 71, thereby heating and insulating the solid electrolyte of the sensor device 101.

The heater 72 is embedded throughout the entire region from the first internal vacancy 20 to the second internal vacancy 40 and can control the activation temperature of the solid electrolyte throughout the sensor device 101.

The heater insulating layer 74 is an insulating layer formed of an insulator, such as alumina, on the top and bottom surfaces of the heater 72. The heater insulating layer 74 is formed in order for electrical insulation between the second substrate layer 2 and the heater 72 and electrical insulation between the third substrate layer 3 and the heater 72.

The pressure release hole 75 passes through the third substrate layer 3 and communicates with the reference gas inlet space 43 and is formed in order to decrease an increase in internal pressure resulting from a temperature rise in the heater insulating layer 74.

As illustrated in Figs. 1 and 2, the sensor device 101 is partly covered with a porous protective film 91. The porous protective film 91 includes porous protective films 91a to 91e on five surfaces out of the six surfaces of the sensor device 101. The porous protective film 91a covers a part of the top surface of the sensor device 101. The porous protective film 91b covers a part of the undersurface of the sensor device 101. The porous protective film 91c covers a part of the left surface of the sensor device 101. The porous protective film 91d covers a part of the right surface of the sensor device 101. The porous protective film 91e covers the entire front end face of the sensor device 101. The porous protective films 91a to 91d entirely cover a region having a length L on the surface of the sensor device 101 from the front end face of the sensor device 101 (see Fig. 2). The porous protective film 91a also covers a portion in which the outer pump electrode 23 is formed. Although the porous protective film 91e also covers the gas inlet 10, because the porous protective film 91e is a porous body, a gas to be measured can reach the gas inlet through the porous protective film 91e. The porous protective film 91 covers and protects part of the sensor device 101 (the region having the length L from the front end face of the sensor device 101). The porous protective film 91 functions to prevent cracking of the sensor device 101, for example, due to thermal shock resulting from adhesion of water contained in a gas to be measured. The porous protective film 91a functions to prevent an oil component contained in a gas to be measured from adhering to the outer pump electrode 23 and thereby prevent degradation of the outer pump electrode 23. The length L depends on the area of the sensor device 101 exposed to a gas to be measured in the gas sensor 100 or the position of the outer pump electrode 23 and is in the range of (0 < length L < the longitudinal length of the sensor device).

In the present embodiment, as illustrated in Fig. 1, the length in the front-back direction, the width in the left-right direction, and the thickness in the upper-lower direction of the sensor device 101 are different (length > width > thickness). The length L is greater than the width and thickness of the sensor device 101. Thus, among the porous protective films 91a to 91e, the porous protective films 91a and 91b have the largest area (= the length L x the width of the sensor device 101), the porous protective films 91c and 91d have the next largest area (= the length L x the thickness of the sensor device 101), and the porous protective film 91e has the smallest area (= the width of the sensor device 101 x the thickness of the sensor device 101).

The porous protective film 91 is a porous sintered body composed mainly of alumina. The porous protective film 91 may contain a zirconia component. The porosity of the porous protective film 91 is not particularly limited and may range from 10% to 60%. The porous protective film 91 has a thickness t (see Fig. 2) that is preferably in the range of 300 to 700 µm, for example. The porous protective films 91a to 91e may have different thicknesses t and preferably have a thickness t in the range of 300 to 700 µm.

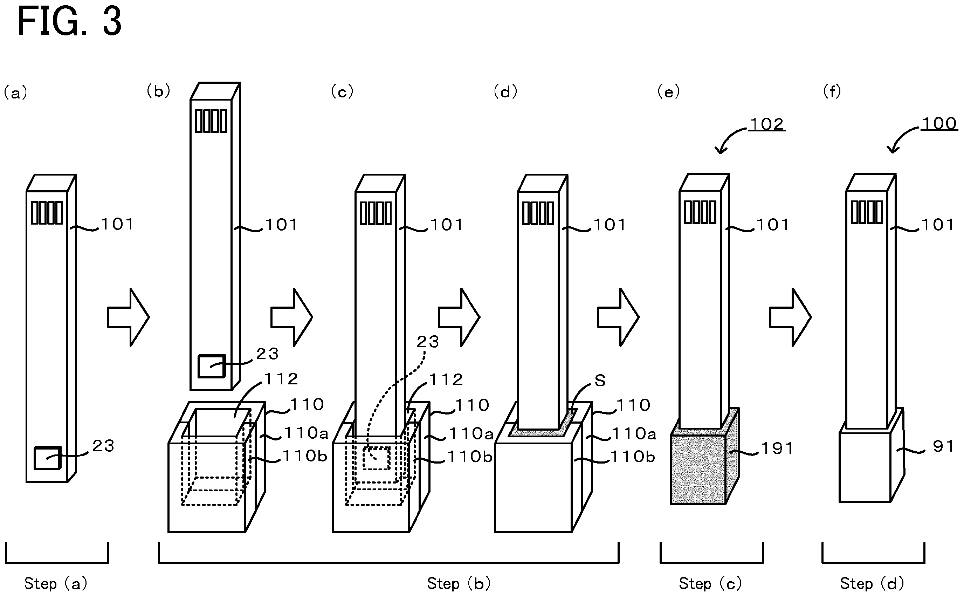

A method for producing the gas sensor 100 will be described below with reference to Fig. 3. Fig. 3 is a production process drawing of the gas sensor 100. A method for producing the gas sensor 100 includes the steps of (a) preparing the sensor device 101, (b) achieving a state that a mold 110 is charged with a slurry for use in a gel casting process, and the sensor device 101 is placed at a predetermined position in the mold 110, (c) molding and hardening the slurry to combine the sensor device 101 and a green film 191 to form a green structure 102, and (d) firing the green structure 102 to produce the gas sensor 100.

In the step (a), the sensor device 101 illustrated in Fig. 3(a) is produced. First, six ceramic green sheets are prepared. The ceramic green sheets can be formed by tape casting of a mixture of an organic binder, an organic solvent, and ceramic particles containing zirconia. The ceramic particles may be zirconia particles to which 4 mol% yttria is added as a stabilizing agent (hereinafter also referred to as stabilized zirconia particles). An electrode, insulating layer, or heating resistor pattern is printed on each ceramic green sheet corresponding to the first substrate layer 1, the second substrate layer 2, the third substrate layer 3, the first solid electrolyte layer 4, the spacer layer 5, or the second solid electrolyte layer 6. After the patterns are printed, the green sheets are dried. The green sheets are then stacked to form a multilayer body. The multilayer body thus formed includes a plurality of the sensor devices 101. The multilayer body is cut in the size of the sensor device 101 and is fired at a predetermined firing temperature, thus yielding the sensor devices 101. A method for producing a sensor device 101 by stacking a plurality of green sheets is known and is described in Japanese Unexamined Patent Application Publication No. 2009-175099 and No. 2012-201776, for example. In the step (a), a produced sensor device 101 may be used instead of producing the sensor device 101. In the step (a), a surface of layers 1 to 6 of the sensor device 101 may be roughened by sandblasting after firing such that the arithmetic mean roughness Ra of a surface of the sensor device 101 ranges from 2.0 to 5.0 µm. Roughening at least a region on a surface of the sensor device 101 in which the porous protective film 91 is formed in the step (d) such that the arithmetic mean roughness Ra ranges from 2.0 to 5.0 µm promotes adhesion between the porous protective film 91 and the surface of the sensor device 101.

In the step (b), first, the front end of the sensor device 101 is placed at a predetermined position in a rectangular recessed portion 112 of the mold 110 (see Figs. 3(b) and 3(c)). The mold 110 is a cup-like mold and is composed of two vertical half molds 110a and 110b closely attached with no spaces therebetween. The front end of the sensor device 101 is placed in the rectangular recessed portion 112 of the mold 110. The front end is a portion of the sensor device 101 to be covered with the porous protective film 91 in Fig. 2 and includes the outer pump electrode 23. Two wide faces of the sensor device 101 are parallel to two wide faces of the rectangular recessed portion 112, and two narrow faces of the sensor device 101 are parallel to two narrow faces of the rectangular recessed portion. The sensor device 101 is fixed by placing the sensor device 101 between clamps (not shown), absorbing the sensor device 101, or attaching the sensor device 101 with an adhesive tape (not shown). The clamps may be made of a metal or resin and are preferably made of an elastic material (for example, silicone rubber). A slurry S for gel casting is prepared and is charged into the rectangular recessed portion 112 in which the sensor device 101 has been placed (see Fig. 3(d)). The components of the slurry S will be described in detail later. The slurry S contains a gelling agent.

In the step (c), the slurry S in the rectangular recessed portion 112 is transformed into a gel through a polymerization reaction of the gelling agent, forming the green film 191 on the front end of the sensor device 101. The sensor device 101 including the green film 191 (the green structure 102) is released from the mold 110 and is dried (see Fig. 3(e)). Since the mold 110 can be divided into two half molds, the green structure 102 can be easily removed. In general, the step (c) is performed at atmospheric pressure and at normal temperature. Since the slurry is injected into the rectangular recessed portion 112 of the mold 110 without pressurization, the material of the mold 110 requires no pressure resistance and may be a metal (for example, aluminum or SUS), a resin (for example, PP or POM), or glass. Demolding may be performed at any time and may be performed when a gelation reaction proceeds sufficiently and when the green structure 102 is ready for demolding. The green structure 102 may be dried by any method, for example, heat drying or air drying. Drying may be performed before, after, or during demolding. In order to improve mold releasability, the inner surface of the rectangular recessed portion 112 may be coated with a lubricant (for example, a fluorinated release agent).

The slurry will be described in detail below. The slurry for gel casting contains a ceramic powder as a raw material powder, a sintering aid, an organic solvent, a dispersant, and a gelling agent.

The ceramic powder is alumina to which zirconia (for example, yttria-stabilized zirconia) is added. The material of the ceramic powder may be appropriately selected for the material of the sensor device 101. For example, the material of the ceramic powder may be selected so as to decrease the difference in thermal expansion coefficient between the material of the ceramic powder and the material of the sensor device 101.

The sintering aid may be appropriately selected depending on the type of ceramic powder and may be one selected from aluminum oxide, zirconium oxide, zinc oxide, silicon oxide, calcium carbonate, barium carbonate, magnesium carbonate, silicon nitride, aluminum nitride, titania, and spinel, or a composite oxide or composite nitride containing two or more of these materials. The specific material of the sintering aid may be selected so as to facilitate bonding between ceramic particles even at low firing temperatures (temperatures lower than the temperatures at which the ceramic powder is sintered without the aid). Formation of a fired product from the ceramic powder in the green film at low temperatures can reduce thermal damage to the substrate. The sintering aid is preferably a sintering aid containing a component for forming a glass layer or a sintering aid that has a large specific surface area and promotes sintering of the ceramic powder even at low temperatures.

The organic solvent may be any solvent that can dissolve the dispersant and the gelling agent and may be a hydrocarbon solvent (such as toluene, xylene, or solvent naphtha), an ether solvent (such as ethylene glycol monoethyl ether, butyl carbitol, or butyl carbitol acetate), an alcohol solvent (such as isopropanol, 1-butanol, ethanol, 2-ethylhexanol, terpineol, ethylene glycol, or glycerin), a ketone solvent (such as acetone or methyl ethyl ketone), an ester solvent (such as butyl acetate, dimethyl glutarate, or triacetin), or a polybasic acid solvent (such as glutaric acid). Among these, preferred is an ester solvent, in particular a solvent having two or more ester bonds, such as a polybasic acid ester (such as dimethyl glutarate) or an acid ester of a polyhydric alcohol (such as triacetin).

The dispersant may be any dispersant that can uniformly disperse a ceramic powder in an organic solvent and may be a polycarboxylic acid copolymer, a polycarboxylic acid salt, a sorbitan fatty acid ester, a polyglycerin fatty acid ester, a phosphate copolymer, a sulfonate copolymer, or a polyurethane polyester copolymer having a tertiary amine. In particular, a polycarboxylic acid copolymer or a polycarboxylic acid salt is preferred. The addition of such a dispersant can reduce the viscosity and increase the flowability of the slurry before molding.

The gelling agent may be any gelling agent that contains at least two polymerizable organic compounds and may be a gelling agent that contains two organic compounds that can undergo a urethane reaction. Such two organic compounds may be an isocyanate and a polyol. The isocyanate may be any substance that has an isocyanate group as a functional group and may be isophorone diisocyanate (IPDI), hexamethylene diisocyanate (HDI), tolylene diisocyanate (TDI), diphenylmethane diisocyanate (MDI), or a modified product thereof. The isocyanate may have a reactive functional group other than the isocyanate group and may have a plurality of isocyanate groups like a polyisocyanate. The polyol may be any substance that has two or more hydroxy groups reactive with an isocyanate group and may be ethylene glycol (EG), poly(ethylene glycol) (PEG), propylene glycol (PG), poly(propylene glycol) (PPG), poly(tetramethylene glycol) (PTMG), poly(hexamethylene glycol) (PHMG), poly(vinyl alcohol) (PVA), or poly(vinyl acetal). A resin having a high molecular weight can reduce the occurrence of cracking during molding. This increases film strength. This also provides elasticity or plasticity. This can further reduce the occurrence of cracking due to volume contraction resulting from drying or demolding. Such a resin may be used alone as a polyol or isocyanate or may be used in combination. A resin not involved in a urethane reaction may be added. The gelling agent may contain a catalyst for promoting a polymerization. The catalyst may be a catalyst for promoting a urethane reaction between an isocyanate and a polyol, such as triethylenediamine, hexanediamine, or 6-dimethylamino-1-hexanol.

In the preparation of a slurry, first, a ceramic powder, a sintering aid, an organic solvent, and a dispersant are mixed at a predetermined ratio for a predetermined time to prepare a slurry precursor. The slurry precursor is mixed with a gelling agent immediately before use of the slurry to prepare the slurry. The slurry gels in minutes or hours. One or two of an isocyanate, a polyol, a resin, a plasticizer, and a catalyst of the gelling agent may be added to the slurry precursor in advance, and the remaining components may be added to prepare the slurry. The mixing method for the preparation of the slurry precursor is not particularly limited, and a ball mill may be used. The mixing method for the preparation of the slurry is also not particularly limited, and a planetary mixer, a propeller mixer, or a static mixer may be used. After the gelling agent is added to the slurry precursor, a chemical reaction (urethane reaction) of the gelling agent proceeds with time in the slurry. Thus, the slurry is preferably rapidly charged into the mold 110.

In the step (d), the green structure 102 is fired to convert the green film 191 into the porous protective film 91 and join the green film 191 to the sensor device 101, thereby producing the gas sensor 100 (see Fig. 3(f)). The firing temperature is lower than the temperatures at which the ceramic powder is sintered without the sintering aid. For example, sintering of an alumina powder without sintering aids requires firing at a temperature in the range of 1500°C to 1700°C. In this embodiment, use of a sintering aid results in firing at a temperature in the range of 900°C to 1300°C. Owing to firing shrinkage or melting of the added sintering aid (for example, silicon oxide for forming a glass layer), the sensor device 101 is bonded to the ceramic powder in the green film 191, and ceramic particles in the green film 191 are bonded together. Thus, the green film 191 is converted into the porous protective film 91. The optimum firing temperature is preferably determined in consideration of the materials in the green film 191 and the difference in firing shrinkage between the sensor device 101 and the porous protective film 91. An excessively high firing temperature unfavorably results in a large firing shrinkage and an increased occurrence of cracking. An excessively low firing temperature unfavorably results in insufficient bonding between the sensor device 101 and the ceramic powder or between ceramic particles.

The correspondence between the constituents of the present embodiment and the constituents of the present invention will be described below. The gas sensor 100 according to the present embodiment corresponds to a film laminated structure according to the present invention. The sensor device 101 corresponds to a substrate. The porous protective film 91 corresponds to a porous film.

In accordance with the method for producing the gas sensor 100 according to the present embodiment described above in detail, the sensor device 101 can be covered with a uniform thick porous protective film 91. More specifically, the volume contraction resulting from hardening of the slurry S is small because the slurry S around the sensor device 101 is molded and hardened by polymerization of the gelling agent containing at least two organic compounds to form the green structure 102. Thus, the porous protective film 91 rarely has cracks after firing. Thus, the sensor device 101 can be covered with a porous thick film (for example, a film having a thickness in the range of 100 to 1000 µm). Furthermore, in the molding, because the mold 110 is charged with the slurry S, and the sensor device 101 is placed at the predetermined position of the rectangular recessed portion 112 of the mold 110, the positional relationship between the porous protective film 91 and the sensor device 101 after firing reflects the positional relationship of the slurry S and the sensor device 101 before firing. Thus, the thickness of the porous protective film 91 after firing can be easily made uniform by adjusting the positional relationship between the slurry S and the sensor device 101 before firing.

Furthermore, because the slurry S contains a sintering aid for a ceramic powder, the ceramic powder can be fired at relatively low temperatures, and the green film 191 can be easily converted into the porous protective film 91.

Furthermore, because the mold 110 is composed of the half molds 110a and 110b closely attached with no spaces therebetween, the green structure 102 can be easily released from the mold 110 by dividing the mold 110.

Furthermore, because the two organic compounds in the slurry S are polymerizable through a urethane reaction, the volume contraction due to hardening of the slurry S can be greatly reduced.

A metallic outer pump electrode 23 is disposed on a fired product (a solid electrolyte layer composed mainly of zirconia) on a surface of the sensor device 101. Because a strong acidic aqueous solution is not used in the gel casting process, and an organic solvent is used in the slurry S, the outer pump electrode 23 is not corroded by acids. Thus, the outer pump electrode 23 of the sensor device 101 can be covered with the porous protective film 91 without corrosion and without adverse effects on the sensor accuracy.

Furthermore, even when the sensor device 101 has variations in its dimensions, because the external dimensions of the porous protective film 91 depend on the shape of the rectangular recessed portion 112 of the mold 110, the porous protective film 91 has consistent external dimensions. The thickness, external shape, and surface profile (for example, roughness and waviness) of the porous protective film 91 can be controlled by modifying the shape of the inner surface of the mold 110. For example, the porous protective film 91 can have round corners and a boundary (the rear end of the porous protective film 91 in Fig. 1) having a desired angle by changing the shape of the rectangular recessed portion 112.

Furthermore, because the gas sensor 100 is produced by the method described above, the porous protective film 91 has substantially uniform porosity in the inside of its cross section, although the porosity is higher on the outermost surface than in the inside of the cross section. This is because the green film 191 formed by the gel casting process is fired.

The present invention is not limited to the embodiments described above.

For example, in the embodiments described above, as illustrated in Figs. 3(b) to 3(d), after the front end of the sensor device 101 is placed at a predetermined position of the vacant rectangular recessed portion 112, the rectangular recessed portion 112 is charged with the slurry S. However, after the rectangular recessed portion 112 is charged with the slurry S, the front end of the sensor device 101 may be placed at a predetermined position in the slurry S.

Although the sensor device 101 after firing is prepared in the step (a) in the embodiments described above, the sensor device 101 before firing, that is, a multilayer body of ceramic green sheets cut in the size of the sensor device 101 may be prepared. In this case, the sensor device before firing and the green film 191 may be simultaneously sintered in the step (c).

Although the length L is greater than the width and thickness of the sensor device 101 in the embodiments described above, the length L is not limited to this. For example, the length L may be smaller than at least one of the width and thickness of the sensor device 101.

Although the mold 110 is composed of two vertical half molds 110a and 110b closely attached with no spaces therebetween in the embodiments described above, the mold 110 may be composed of three or more vertically divided molds closely attached with no spaces therebetween. The direction and position of the division are not particularly limited, provided that the divided molds allow demolding without defects.

Although the thick porous protective film 91 is formed in the embodiments described above, a thin film (a film having a thickness of less than 100 µm) can be formed by the same method. Likewise, a thick film having a thickness of 1000 µm or more can be formed.

Although the mold 110 has the rectangular recessed portion 112 in the embodiments described above, the mold 110 may have any shape. For example, the mold may have runners, gates, and bents branched from one inlet such that a plurality of molded products can be formed. The mold may be tapered to facilitate demolding.

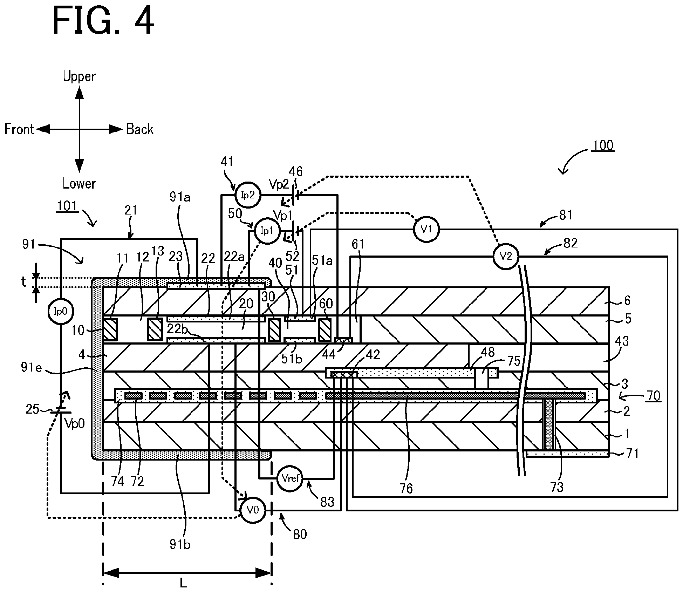

Although the sensor device 101 of the gas sensor 100 includes the first internal vacancy 20 and the second internal vacancy 40 in the embodiments described above, the present invention is not limited to this. For example, the sensor device 101 of the gas sensor 100 may further include a third internal vacancy. Fig. 4 illustrates a cross-sectional view of the gas sensor 100 according to this modified example. Like constituents are denoted by like reference numerals in Figs. 2 and 4. As illustrated in Fig. 4, in the gas sensor 100 according to the modified example, the measuring electrode 44 is not covered with the fourth diffusion controlling portion 45. Instead, like the third diffusion controlling portion 30, a fourth diffusion controlling portion 60 is disposed between the auxiliary pump electrode 51 and the measuring electrode 44. Thus, the second internal vacancy 40, the fourth diffusion controlling portion 60, and a third internal vacancy 61 are disposed in this order and communicate with each other, thus constituting part of the gas flow portion. The auxiliary pump electrode 51 is disposed within the second internal vacancy 40, and the measuring electrode 44 is disposed on the top surface of the first solid electrolyte layer 4 facing the third internal vacancy 61. In the gas sensor 100 according to the modified example, the fourth diffusion controlling portion 60 operates in the same manner as the fourth diffusion controlling portion 45 illustrated in Fig. 2. Thus, in the same manner as the embodiments described above, the NOx concentration of a gas to be measured can be determined. Having the same structure and produced by the same production method, the gas sensor 100 according to the modified example can have the same advantages as the embodiments described above.

### Examples

Production of the gas sensor 100 is described in detail in the following examples. However, the present invention is not limited to these examples. Although the unit of purity is the mass percentage, it is simply expressed in %, for convenience.

### Example 1

In Example 1, the gas sensor 100 was produced by the method described above in the embodiments. First, the sensor device 101 was produced in the step (a). The sensor device 101 had a length of 70 mm in the front-back direction (longitudinal direction), a width of 4 mm in the left-right direction, and a vertical thickness of 1.5 mm. The sensor device 101 had 1.5 mm x 4 mm longitudinal rectangular end faces. In the production of the sensor device 101, ceramic green sheets were formed by tape casting of a mixture of zirconia particles to which 4 mol% yttria was added as a stabilizing agent, an organic binder, and an organic solvent.

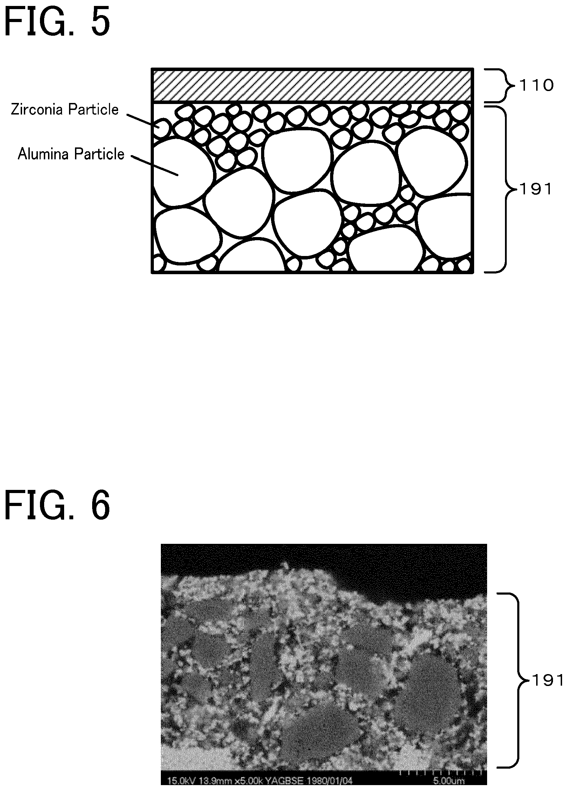

In the steps (b) and (c), the green film 191 was formed on a front end of the sensor device 101 including the outer pump electrode 23 by a gel casting process using a slurry containing an organic solvent as a dispersion medium. The mold 110 was designed such that when the sensor device 101 having an external shape as designed (reference device) is placed in the rectangular recessed portion 112, the green film 191 has a length of 12 mm in the front-back direction (the longitudinal direction of the sensor device 101) and a thickness of 450 µm. The sensor device 101 was fixed by holding the sensor device 101 with an adhesive tape rather than a metal. This allowed the sensor device 101 with an adhesive tape rather than a metal. This allowed the sensor device 101 to be fixed even when the sensor device 101 did not have an external shape as designed. The slurry S was prepared as described below. Seven parts by mass of silicon oxide was added as a sintering aid (a component for forming a glass layer) to a mixed powder of 44 parts by mass of an alumina powder (average particle size 2 µm, purity 99.9%) and 49 parts by mass of zirconia (average particle size 0.3 µm, purity 90%). These were poured into a liquid mixture of 24 parts by mass of a polybasic acid ester serving as an organic solvent, 4 parts by mass of a polycarboxylic acid copolymer serving as a dispersant, and 0.2 parts by mass of ethylene glycol serving as a polyol. The liquid mixture and cobblestones were mixed in a pot for 12 hours to prepare a slurry precursor. The slurry precursor was mixed with a polymethylene polyphenyl polyisocyanate serving as an isocyanate, which constituted 5% by volume of the slurry precursor, and 0.1 parts by mass of a catalyst 6-dimethylamino-1-hexanol in a planetary mixer for 90 seconds, thereby preparing a slurry S. The slurry S was charged into the rectangular recessed portion 112 and, after one hour, was cured such that the cured product could be released from the mold, thereby forming the green film 191. Fig. 5 is a schematic view of the vicinity of a boundary between the mold 110 and the green film 191. In Fig. 5, small zirconia particles were disposed between large alumina particles, and the spaces between these particles were filled with a cured gelling agent. Fig. 5 shows that the mold 110 can be used to control the surface profile of the green film 191. The mold 110 was divided into two molds, and the green structure 102 was released from the mold 110. Fig. 6 is a photograph of a cross section in the vicinity of a surface of the green film 191 (magnification 5000). Large particles are alumina particles, and small particles are zirconia particles. This photograph also shows that the mold can be used to control the surface profile of the green film 191.

In the step (d), the sensor device 101 on which the green film 191 was formed was placed in a setter, was heated to a predetermined temperature of 1100°C at 100°C/h, was held at this temperature for 2 hours, and was naturally cooled to room temperature. The green film 191 was converted into the porous protective film 91. The porous protective film 91 had a length of 12 mm in the front-back direction and a thickness of 450 µm.

### Comparative Example 1

First, a dipping slurry was prepared. This slurry forms a porous protective film by firing. First, 7 parts by mass of silicon oxide was added as a sintering aid (a component for forming a glass layer) to a mixed powder of 44 parts by mass of an alumina powder (average particle size 2 µm, purity 99.9%) and 49 parts by mass of zirconia (average particle size 0.3 µm, purity 90%). Added to this were 24 parts by mass of a xylene/butanol mixture serving as an organic solvent and 4 parts by mass of a polycarboxylic acid polymer serving as a dispersant. A rheology control agent was added to adjust the viscosity to be in the range of 300,000 to 500,000 cP at a shear rate of 0.1 s⁻¹. The same sensor device as in Example 1 was then dipped in the dipping slurry to form a green film on the surface of the sensor device. As in Example 1, the green film had a length of 12 mm in the front-back direction (longitudinal direction). The drawing speed at which the sensor device was drawn from the slurry was 1 mm/s. The drawing direction was the vertical direction. The sensor device on which the green film was formed was then dried twice in a drying furnace at a temperature in the range of 80°C to 90°C for 15 minutes each, thereby drying the green film. During drying, a portion of the sensor device on which the green film was formed faced downward. The green film was then fired. The firing conditions were the same as in Example 1 and are not described here. A gas sensor according to Comparative Example 1 was thus produced. The porous protective film of the gas sensor according to Comparative Example 1 had a length of 12 mm in the front-back direction and a thickness of 450 µm.

### Variations in Thickness of Porous Protective Film

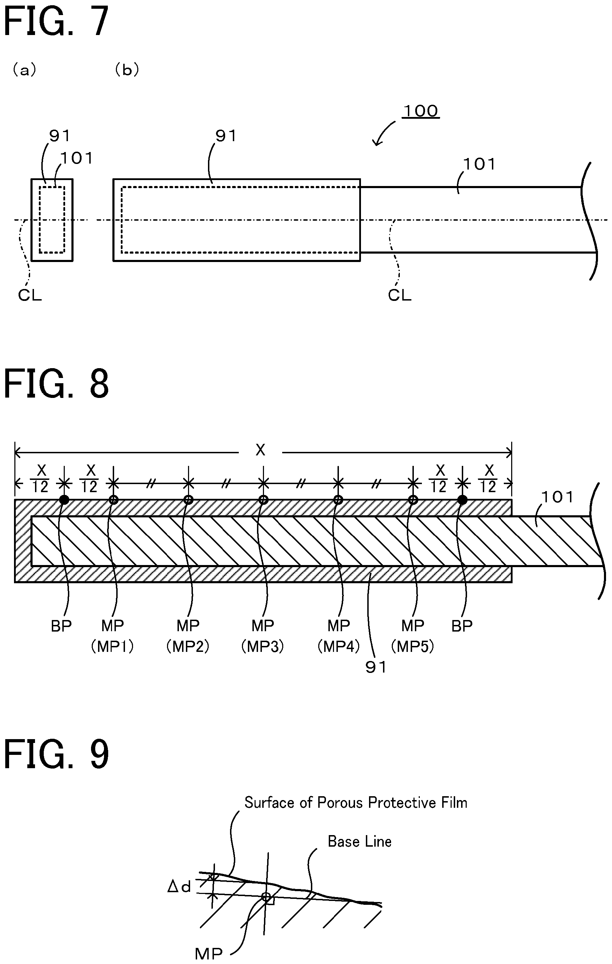

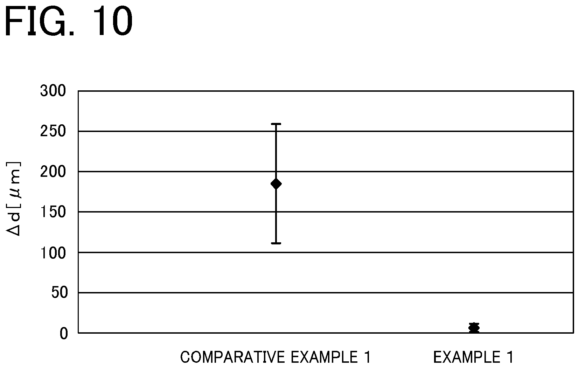

Variations in the thickness of the porous protective film 91 of the gas sensor 100 according to Example 1 were examined. Fig. 7 is an explanatory view of the gas sensor 100; (a) is a front view, and (b) is an upper view. As illustrated in Fig. 7, the gas sensor 100 was cut along the line CL passing through the midpoints of opposite long sides of each longitudinal end face (rectangle) of the sensor device 101. Fig. 8 is a cross-sectional view taken along the line CL. In the cross-section, the longitudinal length of the porous protective film 91 is denoted by X (= 12 mm), and a position spaced inwardly at a distance of X/12 (= 1 mm) from each longitudinal end of the porous protective film 91 is a base position BP. A straight line passing through the two base positions BP was taken as a base line. Five measurement positions MP were selected: two points on the base line spaced inwardly at a distance of X/12 (= 1 mm) from each of the two base positions BP and three points that divide a line segment between the two points into quarters. The intervals between adjacent measurement positions MP were 2 mm. Fig. 9 is an enlarged cross-sectional view in the vicinity of one measurement position MP. As illustrated in Fig. 9, a perpendicular line orthogonal to the base line and passing through a measurement position MP was drawn. The length of the perpendicular line from the measurement position MP to the surface of the porous protective film 91 was denoted by Δd. Table 1 lists the length Δd at each measurement position MP. In Table 1, the base position BP on the front end side (the left side in Fig. 8) was selected as the origin. The five measurement positions MP aligned toward the rear end at intervals of 2 mm are denoted by MP1, MP2, ..., MP5. Variations in the thickness of the porous protective film of the gas sensor according to Comparative Example 1 were also examined in the same manner. Table 1 also shows the results. As is clear from Table 1, in Example 1, the length Δd at the measurement positions MP (MP1 to MP5) ranged from 2 to 15 µm, and variations in the thickness of the porous protective film were very small. In contrast, in Comparative Example 1, the length Δd ranged from 100 to 275 µm, and variations in the thickness of the porous protective film were large. Fig. 10 is a graph of the length Δd of five gas sensors according to Example 1 and five gas sensors according to Comparative Example 1. As is clear from Fig. 10, the length Δd (that is, variations in the thickness of the porous protective film, represented by diamond symbols in Fig. 10) was smaller in Example 1 than in Comparative Example 1. Furthermore, variations in the length Δd between gas sensors (the length of the vertical line segments in Fig. 10) were also smaller in Example 1 than in Comparative Example 1.

**Table 1**

| Example 1 | | Comparative Example 1 | |
|---|---|---|---|
| Measurement Position | Δd(µm) | Measurement Position | Δd(µm) |
| MP1 | 3 | MP1 | 150 |
| MP2 | 2 | MP2 | 250 |
| MP3 | 5 | MP3 | 275 |
| MP4 | 15 | MP4 | 150 |
| MP5 | 5 | MP5 | 100 |

### Porosity of Porous Protective Film

Another gas sensor 100 according to Example 1 was produced. The outermost surface and a cross section of the porous protective film 91 was mechanical polished. The sample was observed with SEM, and the porosity was determined. The porosity was determined from 10,000x magnification images. The results showed that the porosity was higher on the outermost surface than in the inside of the cross section. The porosity was approximately uniform in the inside of the cross section (as determined at the depth in the range of 100 to 400 µm at intervals of 100 µm).

It goes without saying that these examples do not limit the present invention.

### Industrial Applicability

The present invention is applicable to sensor devices that detect the concentration of a predetermined gas, such as NOx, in a measurement target gas, for example, exhaust gas from an automobile.

## Claims

1. A method for producing a film laminated structure (100), comprising the steps of:
(a) preparing a substrate (101);
(b) achieving a state that a mold (110)is charged with a slurry (S) that contains a raw material powder, a gelling agent containing at least two polymerizable organic compounds, and an organic solvent serving as a dispersion medium, and that the substrate is placed at a predetermined position in the mold;
(c) molding and hardening the slurry through a polymerization reaction of the gelling agent to combine the substrate (101) and a green film (191) to form a green structure (102); and
(d) firing the green structure (102) to form a film laminated structure (100), the film laminated structure including a porous film (91), formed from the green film by firing,
wherein the substrate (101) is a sensor device that includes a solid electrolyte layer (5, 6) composed mainly of zirconia.

2. The method for producing a film laminated structure according to Claim 1, wherein the porous film (91) has a thickness in the range of 100 to 1000 µm.

3. The method for producing a film laminated structure according to Claim 1 or 2, wherein the raw material powder is a ceramic powder, and the slurry contains a sintering aid for the ceramic powder.

4. The method for producing a film laminated structure according to any one of Claims 1 to 3, wherein the mold is composed of a plurality of divided molds (110a, 110b) closely attached with no spaces therebetween.

5. The method for producing a film laminated structure according to any one of Claims 1 to 4, wherein the at least two organic compounds are polymerizable through a urethane reaction.

6. The method for producing a film laminated structure according to any one of Claims 1 to 5, wherein at least a surface of the substrate (101) is formed of a fired product and/or metal.

## Patentansprüche

1. Verfahren zur Herstellung einer filmbeschichteten Struktur (100), umfassend die Schritte:
(a) Herstellung eines Substrats (101);
(b) Erreichen eines Zustands, worin eine Form (110) mit einer Aufschlämmung (S) beladen wird, die ein Rohmaterialpulver, ein Geliermittel, das zumindest zwei polymerisierbare organische Verbindungen enthält, und ein organisches Lösungsmittel, das als Dispersionsmedium dient, enthält, und worin das Substrat auf eine vorgegebene Position in der Form platziert wird;
(c) Formung und Härtung der Aufschlämmung durch eine Polymerisationsreaktion des Geliermittels, um das Substrat (101) und einen Grünfilm (191) zu vereinen, um eine Grünstruktur (102) zu bilden; und
(d) Brennen der Grünstruktur (102), um eine filmbeschichtete Struktur (100) zu bilden, wobei die filmbeschichtete Struktur einen porösen Film (91) umfasst, der durch das Brennen aus des Grünfilms gebildet wurde,
wobei das Substrat (101) eine Sensorvorrichtung ist, die eine feste Elektrolytschicht (5, 6) umfasst, die hauptsächlich aus Zirconiumdioxid besteht.

2. Verfahren zur Herstellung einer filmbeschichteten Struktur nach Anspruch 1, wobei der poröse Film (91) eine Dicke im Bereich von 100 bis 1000 µm aufweist.

3. Verfahren zur Herstellung einer filmbeschichteten Struktur nach Anspruch 1 oder 2, wobei das Rohmaterialpulver ein Keramikpulver ist und die Aufschlämmung ein Sinterhilfsmittel für das Keramikpulver enthält.

4. Verfahren zur Herstellung einer filmbeschichteten Struktur nach einem der Ansprüche 1 bis 3, wobei die Form aus einer Vielzahl von geteilten Formen (110a, 110b) aufgebaut ist, die ohne Zwischenräume eng verbunden sind.

5. Verfahren zur Herstellung einer filmbeschichteten Struktur nach einem der Ansprüche 1 bis 4, wobei die zumindest zwei organischen Verbindungen durch eine Urethan-Reaktion polymerisierbar sind.

6. Verfahren zur Herstellung einer filmbeschichteten Struktur nach einem der Ansprüche 1 bis 5, wobei zumindest eine Oberfläche des Substrats (101) aus einem gebrannten Produkt und/oder Metall geformt ist.

## Revendications

1. Procédé de production d'une structure stratifiée en film (100), comprenant les étapes consistant à :
(a) préparer un substrat (101) ;
(b) atteindre un état dans lequel un moule (110) est chargé avec une suspension (S) contenant une poudre de matière première, un agent gélifiant contenant au moins deux composés organiques polymérisables et un solvant organique servant de milieu de dispersion, et dans lequel le substrat est placé dans une position prédéterminée dans le moule ;
(c) mouler et durcir la suspension par une réaction de polymérisation de l'agent gélifiant pour combiner le substrat (101) et un film cru (191) afin de former une structure crue (102) ; et
(d) cuire la structure verte (102) pour former une structure stratifiée en film (100), la structure stratifiée en film comprenant un film poreux (91), formé à partir du film cru par cuisson,
dans lequel le substrat (101) est un dispositif capteur qui comprend une couche d'électrolyte solide (5, 6) composée principalement de zircone.

2. Procédé de production d'une structure stratifiée en film selon la revendication 1, dans lequel le film poreux (91) a une épaisseur dans la plage de 100 à 1000 µm.

3. Procédé de production d'une structure stratifiée en film selon la revendication 1 ou 2, dans lequel la poudre de matière première est une poudre de céramique, et la suspension contient un adjuvant de frittage pour la poudre de céramique.

4. Procédé de production d'une structure stratifiée en film selon l'une quelconque des revendications 1 à 3, dans lequel le moule est composé d'une pluralité de moules divisés (110a, 110b) étroitement reliés sans espace entre eux.

5. Procédé de production d'une structure stratifiée en film selon l'une quelconque des revendications 1 à 4, dans lequel les au moins deux composés organiques sont polymérisables par une réaction d'uréthane.

6. Procédé de production d'une structure stratifiée en film selon l'une quelconque des revendications 1 à 5, dans lequel au moins une surface du substrat (101) est formée d'un produit cuit et/ou d'un métal.
